# FASCICULE DE BREVET EUROPEEN

(11) **EP 2 448 813 B1**
(45) Date de publication et mention de la délivrance du brevet: **21.05.2014**
(21) Numéro de dépôt: 10734190.1
(22) Date de dépôt: 02.07.2010
(51) Int. Cl.: B64C 1/12, B64C 1/06

(54) **ELEMENT DE FUSELAGE COMPORTANT UN TRONCON DE FUSELAGE ET DES MOYENS DE JONCTION, PORTION DE FUSELAGE, FUSELAGE ET AERONEF**
RUMPFELEMENT MIT EINEM RUMPFSEGMENT UND ÜBERGANGSVORRICHTUNG, RUMPFTEIL, RUMPF UND FLUGZEUG
FUSELAGE ELEMENT COMPRISING A FUSELAGE SEGMENT AND JUNCTION MEANS, FUSELAGE PORTION, FUSELAGE AND AIRCRAFT

(30) Priorité: 03.07.2009 FR 0954625
(43) Date de publication de la demande: 09.05.2012
(73) Titulaire: Airbus Operations, 31060 Toulouse (FR)
(72) Inventeur: MOREAU, Dominique, 31140 Aucamville (FR); MEYER, Cédric, 31470 Fonsorbes (FR); GAUDIN, Jocelyn, 31500 Toulouse (FR)
(74) Mandataire: Petit, Maxime
(86) Numéro de dépôt international: PCT/FR2010/000488
(87) Numéro de publication internationale: WO 2011/001049

(56) Documents cités:
- FR-A1- 2 906 008
- FR-A1- 2 922 518

## Description

La présente invention concerne un élément de fuselage, ainsi qu'une portion de fuselage comprenant un tel élément et un tronçon adjacent.

Plus particulièrement, elle concerne un élément de fuselage comportant un tronçon de fuselage et des moyens de jonction aptes à raccorder le tronçon de fuselage à un tronçon adjacent.

Un élément de fuselage selon le préambule de la revendication 1 est connu du document FR 2 906 008 A1.

Le fuselage d'un aéronef comporte notamment une peau et des éléments raidisseurs de cette peau. Les éléments raidisseurs sont disposés soit dans une direction longitudinale (connus comme lisses), soit dans un plan transversal à l'axe du fuselage (connus comme cadres).

Le fuselage comporte généralement plusieurs tronçons de fuselage assemblés entre eux. Ces tronçons de fuselage sont assemblés au moyen de jonctions. L'objectif des jonctions est notamment de transférer les charges mécaniques entre tronçons adjacents, notamment les efforts longitudinaux.

De manière générale, le fuselage, ainsi que les jonctions, présentent une forme cylindrique, bien que d'autres formes puissent être envisagées.

Il existe des jonctions qui sont conçues de manière à assurer la continuité des lisses. Le document FR 2 910 874 décrit des jonctions ainsi conçues.

Ces jonctions comportent des éléments mécaniques de jonction tels qu'une virole et des éclisses de lisses. La virole permet de relier les peaux des deux tronçons adjacents et les éclisses de lisses permettent de relier les lisses ou raidisseurs longitudinaux.

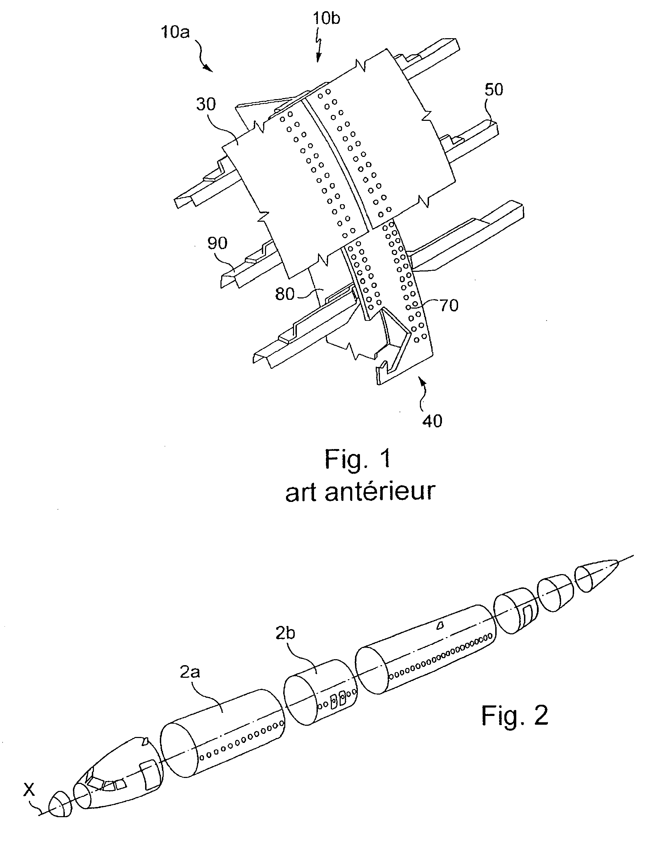

Un exemple d'une telle conception est représenté à la figure 1. Cette figure représente une partie de deux tronçons de fuselage 2a, 2b adjacents. Le fuselage présente une forme cylindrique et comporte une peau 30, ainsi que des lisses 50 situées dans un plan longitudinal. Une jonction cylindrique 40 est disposée entre ces deux tronçons cylindriques de fuselage 2a, 2b au niveau du cadre 80. Cette jonction 40 comporte une virole 70, située sur la surface intérieure de la peau 30 du fuselage et reliant les peaux 30 des deux tronçons 2a, 2b, ainsi que des éclisses de lisses 90 situées respectivement sur les lisses 50 et reliant les lisses 50 des deux tronçons 2a, 2b.

Lorsque les efforts à transmettre entre les tronçons de fuselage 2a, 2b sont élevés (typiquement, supérieurs à 600N/mm), l'utilisation d'éclisses de lisses 90 est nécessaire.

Néanmoins, l'installation des éclisses de lisses dans l'élément de jonction présente des problèmes d'ajustage des différents éléments. Ainsi, des tolérances du positionnement des différents éléments de la jonction peuvent apparaître. Par exemple, lorsque les lisses de deux tronçons de fuselage ne sont pas exactement en face l'une de l'autre, il peut être nécessaire l'utilisation de cales entre les lisses et les éclisses de lisse.

En outre, l'installation des éclisses de lisses nécessite un accès à l'élément de jonction de l'intérieur du fuselage. Ceci rend difficile l'automatisation de l'assemblage des tronçons. Par conséquent, le temps d'assemblage est élevé.

La présente invention a pour but de résoudre les inconvénients précités et de proposer un élément de fuselage comportant un tronçon de fuselage et des moyens de jonction entre ce tronçon et un tronçon adjacent, présentant une bonne stabilité au niveau de la jonction entre les tronçons, tout en limitant la complexité de l'assemblage.

A cet effet, la présente invention vise un élément de fuselage comportant un tronçon de fuselage comportant une peau, et des moyens de jonction aptes à raccorder ledit tronçon à un tronçon adjacent, ledit tronçon s'étendant le long de l'axe longitudinal du fuselage, l'élément de fuselage comportant des éléments raidisseurs s'étendent selon ledit axe, caractérisé en ce que l'extrémité d'au moins un élément raidisseur dépasse un bord libre de ladite peau d'une longueur prédéterminée.

Ainsi, la présence des éclisses de lisse n'est pas nécessaire puisque certains raidisseurs permettent la transmission des efforts directement sur le tronçon adjacent.

De plus, en absence d'éclisse, les différences de positionnement relatif entre les lisses d'un tronçon et du tronçon adjacent ne présentent pas de problème.

En outre, l'accès à l'intérieur du fuselage après assemblage des tronçons n'est plus nécessaire, et l'automatisation est plus simple à mettre en oeuvre.

La présente invention vise selon un deuxième aspect une portion de fuselage comportant un élément de fuselage comme décrit ci-dessus et un second tronçon de fuselage adjacent au premier tronçon et s'étendant le long de l'axe longitudinal du fuselage, la peau du second tronçon de fuselage étant raccordée à la peau du premier tronçon de fuselage de l'élément de fuselage, le second tronçon de fuselage comportant des éléments raidisseurs s'étendant le long de l'axe sur sensiblement toute la longueur du second tronçon de fuselage et étant disposés avec un décalage angulaire autour de l'axe longitudinal par rapport audit au moins un élément raidisseur du premier tronçon de fuselage dépassant le bord libre de la peau du premier tronçon de fuselage.

Ainsi, les efforts passent des lisses du premier tronçon de fuselage aux lisses du second tronçon de fuselage, et vice-versa. Ceci limite les efforts à faire passer de la peau d'un tronçon à la peau de l'autre tronçon.

Par conséquent, dès lors que la peau est moins sollicitée, l'épaisseur peut être inférieure que dans l'art antérieur, limitant ainsi l'augmentation de masse.

En outre, grâce au décalage angulaire des éléments raidisseurs du second tronçon de fuselage par rapport aux éléments raidisseurs du premier tronçon de fuselage, il n'existe pas de problème de disposition dudit au moins un élément raidisseur débordant du premier tronçon de fuselage lors de l'assemblage des tronçons.

Selon une solution envisagée, les éléments raidisseurs du premier tronçon de fuselage dépassent le bord libre de la peau du premier tronçon de fuselage et les éléments raidisseurs du second tronçon de fuselage dépassent le bord libre de la peau du second tronçon de fuselage, chaque raidisseur du premier tronçon de fuselage étant intercalé entre deux raidisseurs du second tronçon de fuselage.

Selon un mode de réalisation, les tronçons de fuselage comportent au moins une première portion située à l'extrémité au niveau des moyens de jonction présentant une épaisseur de peau supérieure à l'épaisseur de la peau d'une seconde portion située au centre desdits tronçons de fuselage.

Grace à ses surépaisseurs au niveau des moyens de jonction, la peau est renforcée localement, étant plus stable lors du passage des efforts d'un tronçon au tronçon adjacent.

Ces surépaisseurs sont inférieures à celles de l'art antérieur grâce au dépassement des raidisseurs longitudinaux au delà du bord libre de la peau du premier tronçon.

On peut prévoir en outre que les moyens de jonction de l'élément de jonction comportent une virole apte à relier la peau du premier tronçon de fuselage et du second tronçon de fuselage adjacent.

Ainsi, la peau au niveau des moyens de jonction est d'autant plus renforcée, et par conséquent la jonction entre tronçons est d'autant plus stable.

Par ailleurs, les moyens de jonction peuvent comporter un second élément raidisseur du fuselage (dénommé cadre dans la suite) comportant un corps s'étendant dans un plan transversal à l'axe longitudinal du fuselage, et une semelle s'étendant selon l'axe longitudinal du fuselage.

Dans un mode de réalisation, la virole est disposée sur la surface extérieure de la peau et ladite semelle est fixée sur la surface intérieure de la peau de la première portion dudit premier tronçon de fuselage.

Grace au second élément raidisseur la jonction est encore plus stable.

Dans un autre mode de réalisation, un second élément raidisseur du fuselage comporte un corps s'étendant dans un plan transversal à l'axe longitudinal du fuselage, l'élément de fuselage comporte une partie de couronne s'étendant de la peau vers l'axe longitudinal du fuselage, dans un plan transversal audit axe longitudinal du fuselage, adaptée à fixer ledit corps dudit second élément raidisseur.

Dans ce mode de réalisation le second élément raidisseur n'est pas ajouré pour faire passer les éléments raidisseurs dépassant du bord libre de la peau du premier tronçon.

Ceci évite la présence des éventuelles instabilités dans le second élément raidisseur.

La présente invention vise selon un troisième aspect un fuselage d'aéronef comportant au moins une portion de fuselage conforme à l'invention

La présente invention vise selon un quatrième aspect un aéronef comportant un fuselage conforme à l'invention.

Cette portion de fuselage, ce fuselage d'aéronef et cet aéronef présentent des caractéristiques et avantages analogues à ceux décrits précédemment en relation avec l'élément de fuselage.

D'autres particularités et avantages de l'invention apparaîtront encore dans la description ci-après.

Aux dessins annexés, donnés à titre d'exemples non limitatifs :
- la figure 1 est un schéma illustrant une partie d'élément de fuselage raccordée à un second élément de fuselage appartenant à l'art antérieur ;
- la figure 2 est un schéma illustrant des tronçons de fuselage d'un aéronef ;
- la figure 3 est un schéma illustrant une partie d'élément de fuselage raccordée à un second élément de fuselage selon un premier mode de réalisation conforme à l'invention ; et
- la figure 4 est un schéma illustrant une partie d'élément de fuselage raccordée à un second élément de fuselage selon un second mode de réalisation conforme à l'invention.

La figure 2 représente plusieurs tronçons 2a, 2b de fuselage.

Ces tronçons de fuselage 2a, 2b sont assemblés entre eux afin de former le fuselage d'un aéronef. Deux tronçons 2a, 2b de fuselage sont assemblés au moyen de moyens de jonction (non représenté sur la figure 2) comme il sera décrit ci-dessous.

Les tronçons de fuselage s'étendent le long d'un axe longitudinal X.

Ici, la forme des tronçons de fuselage est cylindrique, et par conséquent les moyens de jonction présentent la même forme (ou sont adaptés à cette forme).

Néanmoins, les tronçons de fuselage, ainsi que les moyens de jonction, peuvent présenter des formes différentes.

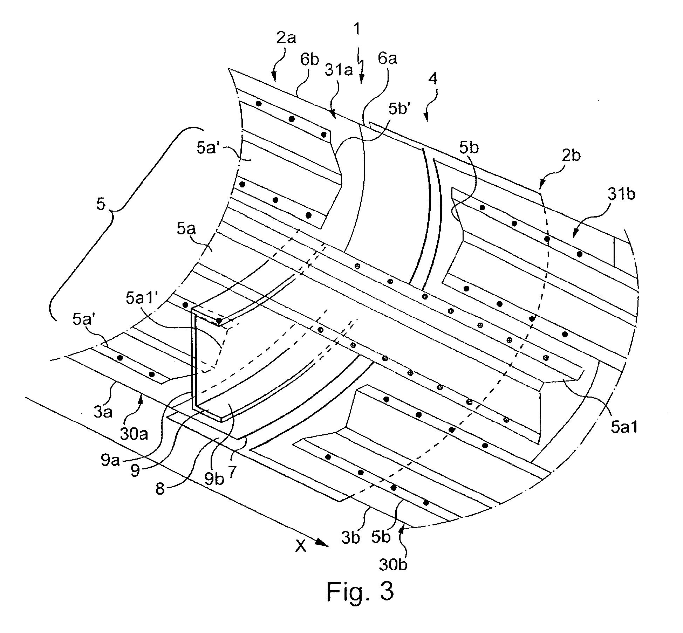

On va décrire ensuite en référence à la figure 3 un premier mode de réalisation d'un élément de fuselage conforme à l'invention.

La figure 3 représente une partie d'un élément de fuselage 1 vue de l'intérieur du fuselage.

L'élément de fuselage 1 comporte un premier tronçon de fuselage 2a et des moyens de jonction 4 aptes à raccorder le premier tronçon 2a à un second tronçon adjacent 2b.

Ici, il est représenté une partie de chaque tronçon 2a, 2b.

Ainsi, seulement une extrémité de chaque tronçon 2a, 2b est représentée.

Dans cet exemple, les moyens de jonction 4 comportent une virole 8 qui est adaptée à raccorder les peaux 3a, 3b de chaque tronçon 2a, 2b.

Ici, la virole 8 est disposée sur la surface extérieure 30a, 30b de la peau 3a, 3b des tronçons de fuselage 2a, 2b. Néanmoins, en variante, la virole 8 peut être disposée sur la surface intérieure 31a, 31b de la peau 3a, 3b.

Les tronçons 2a, 2b de fuselage comportent des raidisseurs qui s'étendent dans des plans longitudinaux ou lisses 5, et des raidisseurs qui s'étendent dans des plans transversaux ou cadres 9.

Ici, le cadre 9 est situé au niveau des moyens de jonction 4. Il est représenté partiellement afin de laisser visibles les autres éléments de la figure 3.

Le cadre 9 comporte un corps 9a s'étendant dans un plan transversal à l'axe longitudinal X du fuselage, et une semelle 9b s'étendant selon l'axe longitudinal X du fuselage.

Dans ce mode de réalisation, la semelle est en appui sur la surface intérieure 31a de la peau 3a du premier tronçon de fuselage 2a.

Dans ce mode de réalisation, l'extrémité 5a1 d'au moins un élément raidisseur 5a du premier tronçon 2a dépasse la circonférence située en extrémité de la peau 3a du premier tronçon de fuselage 2a ou bord libre 7.

Ainsi, l'extrémité 5a1 de ce au moins un élément raidisseur 5a est décalée longitudinalement par rapport à l'extrémité 5a1' des autres éléments raidisseurs du même tronçon 2a.

Par conséquent, une portion de cet élément raidisseur 5a est ainsi située au niveau du second tronçon 2b de fuselage. L'élément raidisseur 5a dépasse le bord libre 7 de la peau 3a du premier tronçon de fuselage 2a d'une longueur prédéterminée L.

A titre d'exemple nullement limitatif, cette longueur prédéterminée L peut présenter des valeurs appartenant à une fourchette de valeurs de 300 mm à 600 mm.

Bien entendu, ces valeurs de longueur prédéterminée L peuvent être différentes, notamment en fonction de la taille et du type de fuselage.

On note que le cadre 9 est ajouré pour permettre le passage de l'élément raidisseur 5a.

Dans un mode de réalisation, le premier tronçon 2a comporte des lisses 5a' dont l'extrémité 5a1' ne dépasse pas le bord libre 7 du premier tronçon 2a, et des lisses 5a dont l'extrémité 5a1 dépasse le bord libre 7 du premier tronçon 2a, en nombre identique.

Dans un mode de réalisation, une lisse 5a dont l'extrémité 5a1 dépasse le bord libre 7 et une lisse 5a' dont l'extrémité 5a1' ne dépasse pas le bord libre sont disposées alternativement le long de la circonférence de la peau 3a du premier tronçon 2a.

Dans d'autres modes de réalisation, un ensemble de lisses 5a dont l'extrémité 5a1 dépasse le bord libre 7 sont disposées consécutivement le long de la circonférence de la peau 3a du premier tronçon 2a. Il en est de même pour un ensemble de lisses 5a' dont l'extrémité 5a1' ne dépasse pas le bord libre 7.

Ainsi, des ensembles formés par plusieurs lisses du même type 5a, 5a' sont disposés alternativement entre eux le long de la circonférence de la peau 3a du premier tronçon 2a.

Par exemple, chaque ensemble peut contenir une seule lisse. Ainsi, une lisse 5a dépassant le bord libre 7 et une lisse 5a' ne dépassant pas le bord libre 7 sont disposées alternativement entre elles.

Néanmoins, le nombre de lisses, dans chaque ensemble, peut être supérieur à 1, par exemple 2 ou plus.

Il est possible que dans certain modes de réalisation, il n'existe qu'un seul ensemble comportant des lisses 5a dépassant le bord libre 7 et qu'un seul ensemble comportant des lisses 5a' ne dépassant pas le bord libre 7.

Le nombre de lisses 5a dépassant le bord libre 7 et de lisses 5a' ne dépassant pas le bord libre peut être différent. Par exemple, le nombre de lisses 5a dépassant le bord libre 7 présente une valeur d'au moins 10% du nombre de lisses 5a' ne dépassant pas le bord libre 7.

En général, le premier tronçon 2a et le second tronçon adjacent 2b sont similaires. Ainsi, le second tronçon adjacent 2b comporte également des éléments raidisseurs 5b s'étendant le long de l'axe longitudinal X.

Lorsque les deux tronçons 2a, 2b sont assemblés, les lisses 5b du second tronçon 2b sont disposées avec un décalage angulaire autour de l'axe longitudinal X par rapport aux lisses 5a du premier tronçon 2a dépassant le bord libre 7 de la peau 3a du premier tronçon 2a.

Dans un autre mode de réalisation, toutes les lisses 5a, 5b des deux tronçons 2a, 2b de fuselage dépassent les bords libres 7 des tronçons respectifs 2a, 2b.

Ainsi, lorsque les deux tronçons 2a, 2b sont assemblés, les lisses 5a du premier tronçon 2a sont intercalées entre deux lisses 5b du second tronçon 2b de fuselage, et sont disposées avec un décalage angulaire autour de l'axe longitudinal X entre elles.

Ainsi, les efforts sont transmis entre les lisses des premier et second tronçons de fuselage 2a, 2b, limitant les efforts à faire passer entre les peaux de tronçon 2a et 2b.

A titre d'exemple nullement limitatif, le décalage angulaire autour de l'axe longitudinal X entre une lisse 5a du premier tronçon 2a et une lisse 5b du second tronçon 2b consécutives présente une valeur appartenant à une fourchette de valeurs entre 5° et 20°, et plus particulièrement entre 5° et 10°.

La valeur du décalage entre deux lisses consécutives 5a, 5b appartenant respectivement aux premier 2a et second 2b tronçons, exprimée en longueur de circonférence appartient par exemple à une fourchette de valeurs entre 130 mm et 200 mm.

Dans un mode de réalisation, une section circulaire 6a de la peau 3a du premier tronçon de fuselage 2a située à l'extrémité du tronçon 2a (au niveau des moyens de jonction 4) présente une épaisseur de peau supérieure à l'épaisseur de peau d'une seconde section 6b située au centre du tronçon de fuselage 2a.

Ainsi, la peau est renforcée localement, ce qui rend encore plus stable la jonction entre les deux tronçons de fuselage 2a, 2b.

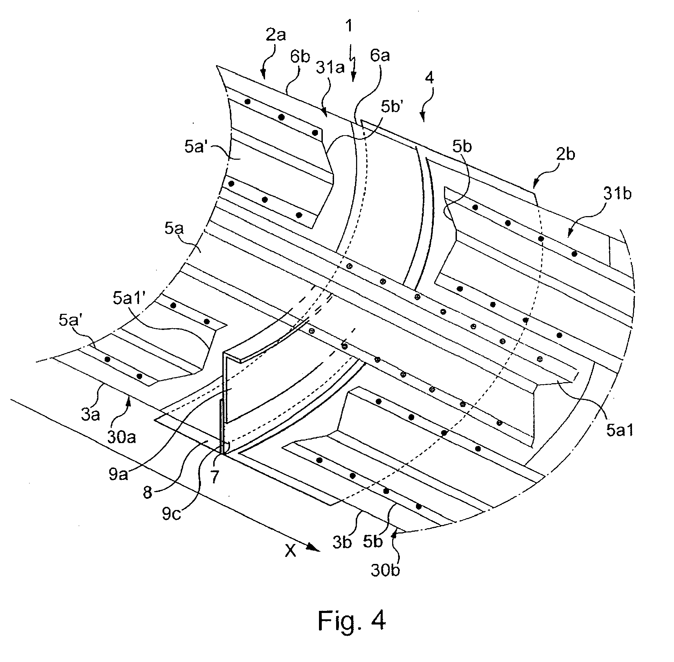

On va décrire en référence à la figure 4 un autre mode de réalisation conforme à l'invention.

Ce mode de réalisation est similaire au mode de réalisation décrit en référence à la figure 3.

Ainsi, les éléments en communs ne seront pas décrits ici.

Dans ce mode de réalisation, l'élément de fuselage 1 comporte une couronne (représentée partiellement sur la figure 4), par exemple, réalisée d'une pièce avec la virole 8. La couronne 9c s'étend dans un plan transversal à l'axe longitudinal X du fuselage vers l'intérieur du fuselage, c'est-à-dire de la peau 3a, 3b vers l'axe du fuselage X.

Cette couronne 9c est adaptée à fixer le corps 9a du cadre 9 et s'étend sur certaines des parties de la circonférence du fuselage de manière à ménager un passage pour les éléments raidisseurs dépassants 5a.

Par conséquent, la jonction des tronçons 2a, 2b est d'autant plus stable du fait que le cadre n'est pas ajouré pour faire passer les lisses 5a dépassant du bord libre 7 de la peau 3a du premier tronçon 2a.

Dans un autre exemple, la couronne 9c pourrait être un élément indépendant de la virole 8 et être par exemple en appui sur la peau 3a, 3b d'un tronçon de fuselage 2a, 2b.

Ainsi, grâce à l'invention, il est possible d'assembler deux tronçons de fuselage adjacents au moyen des moyens de jonction qui permettent une bonne stabilité.

En outre, la complexité d'assemblage est limitée et l'automatisation d'assemblage est plus simple à mettre en oeuvre.

Bien entendu, de nombreuses modifications peuvent être apportées à l'exemple de réalisation décrit précédemment sans sortir du cadre de l'invention.

Ainsi, par exemple, comme déjà indiqué, les formes de fuselage peuvent être différentes.

## Revendications

1. Elément de fuselage (1) comportant un premier tronçon de fuselage (2a) comportant une peau (3a), et des moyens de jonction (4) aptes à raccorder ledit premier tronçon (2a) à un second tronçon de fuselage adjacent (2b), ledit premier tronçon (2a) s'étendant le long de l'axe longitudinal (X) du fuselage, l'élément de fuselage (1) comportant des éléments raidisseurs (5a) s'étendant selon ledit axe (X), **caractérisé en ce que** l'extrémité (5a1) d'au moins un élément raidisseur (5a) dépasse un bord libre (7) de ladite peau (3a) d'une longueur prédéterminée (L).

2. Portion de fuselage, **caractérisée en ce qu'**elle comporte un élément de fuselage (1) conforme à la revendication 1, et un second tronçon de fuselage adjacent (2b) au premier tronçon (2a) et s'étendant le long de l'axe longitudinal (X) du fuselage, la peau (3b) dudit second tronçon de fuselage (2b) étant raccordée à la peau (3a) dudit premier tronçon de fuselage (2a) dudit élément de fuselage (1), ledit second tronçon de fuselage (2b) comportant des éléments raidisseurs (5b) s'étendant le long dudit axe (X) sur sensiblement toute la longueur du second tronçon de fuselage (2b) et étant disposés avec un décalage angulaire autour de l'axe longitudinal (X) par rapport audit au moins un élément raidisseur (5a) du premier tronçon de fuselage (2a) dépassant le bord libre (7) de la peau (3a) du premier tronçon de fuselage (2a).

3. Portion de fuselage conforme à la revendication 2, **caractérisé en ce que** les éléments raidisseurs (5a) dudit premier tronçon de fuselage (2a) dépassent le bord libre (7) de la peau (3a) du premier tronçon de fuselage (2a) et les élément raidisseurs (5b) dudit second tronçon de fuselage (2b) dépassent le bord libre de la peau (3b) du second tronçon de fuselage (2b), chaque raidisseur du premier tronçon de fuselage (2a) étant intercalé entre deux raidisseurs du second tronçon de fuselage (2b).

4. Portion de fuselage conforme à l'une des revendications 2 ou 3, **caractérisé en ce que** lesdits tronçons de fuselage (2a, 2b) comportent au moins une première portion (6a) située à l'extrémité au niveau des moyens de jonction (4) présentant une épaisseur de peau (3a) supérieure à l'épaisseur de la peau d'une seconde portion (6b) située au centre desdits tronçons de fuselage (2a, 2b).

5. Portion de fuselage conforme à l'une des revendications 2 à 4, **caractérisé en ce que** lesdits moyens de jonction (4) dudit élément de fuselage (1) comportent une virole (8) apte à relier les peaux (3a, 3b) du premier tronçon de fuselage (2a) et du second tronçon de fuselage adjacent (2b).

6. Portion de fuselage conforme à l'une des revendications 2 à 5, **caractérisé en ce que** les moyens de jonction (4) comportent un second élément raidisseur (9) du fuselage comportant un corps (9a) s'étendant dans un plan transversal à l'axe longitudinal (X) du fuselage, et une semelle (9b) s'étendant selon l'axe longitudinal (X) du fuselage.

7. Portion de fuselage conforme à la revendication 6 prise dans la dépendance de la revendication 5, **caractérisé en ce que** ladite virole (8) est disposée sur la surface extérieure de la peau (3a) et ladite semelle (9b) est fixée sur la surface intérieure (31a) de la peau (3a) dudit premier tronçon de fuselage (2a).

8. Portion de fuselage conforme à l'une des revendications 2 à 5, **caractérisé en ce qu'**un second élément raidisseur (9) du fuselage comporte un corps (9a) s'étendant dans un plan transversal à l'axe longitudinal (X) du fuselage, l'élément de fuselage (1) comporte une partie de couronne (9c) s'étendant de la peau (3a) vers l'axe longitudinal (X) du fuselage, dans un plan transversal audit axe longitudinal (X) du fuselage, adaptée à fixer ledit corps (9a) dudit second élément raidisseur (9).

9. Fuselage d'aéronef **caractérisé en ce qu'**il comporte au moins une portion de fuselage conforme à l'une des revendications 2 à 8.

10. Aéronef **caractérisé en ce qu'**il comporte un fuselage selon la revendication 9.

## Patentansprüche

1. Rumpfelement (1), umfassend ein erstes Rumpfteilstück (2a) mit einer Haut (3a) sowie Verbindungsmittel (4), die geeignet sind, das erste Teilstück (2a) mit einem benachbarten zweiten Rumpfteilstück (2b) zu verbinden, wobei das erste Teilstück (2a) entlang der Längsachse (X) des Rumpfes verläuft, wobei das Rumpfelement (1) entlang der Achse (X) verlaufende Versteifungselemente (5a) umfasst, **dadurch gekennzeichnet, dass** das Ende (5a1) wenigstens eines Versteifungselements (5a) über einen freien Rand (7) der Haut (3a) um eine vorbestimmte Länge (L) hinausragt.

2. Rumpfabschnitt, **dadurch gekennzeichnet, dass** er ein Rumpfelement (1) nach Anspruch 1 sowie ein zweites Rumpfteilstück (2b), das zu dem ersten Teilstück (2a) benachbart ist und das entlang der Längsachse (X) des Rumpfes verläuft, umfasst, wobei die Haut (3b) des zweiten Rumpfteilstücks (2b) mit der Haut (3a) des ersten Rumpfteilstücks (2a) des Rumpfelements (1) verbunden ist, wobei das zweite Rumpfteilstück (2b) Versteifungselemente (5b) umfasst, die entlang der Achse (X) über im Wesentlichen die gesamte Länge des zweiten Rumpfteilstücks (2b) verlaufen und die mit einem Winkelversatz um die Längsachse (X) gegenüber dem wenigstens einen Versteifungselement (5a) des ersten Rumpfteilstücks (2a), das über den freien Rand (7) der Haut (3a) des ersten Rumpfteilstücks (2a) hinausragt, angeordnet sind.

3. Rumpfabschnitt nach Anspruch 2, **dadurch gekennzeichnet, dass** die Versteifungselemente (5a) des ersten Rumpfteilstücks (2a) über den freien Rand (7) der Haut (3a) des ersten Rumpfteilstücks (2a) hinausragen und die Versteifungselemente (5b) des zweiten Rumpfteilstücks (2b) über den freien Rand der Haut (3b) des zweiten Rumpfteilstücks (2b) hinausragen, wobei jede Versteifung des ersten Rumpfteilstücks (2a) zwischen zwei Versteifungen des zweiten Rumpfteilstücks (2b) eingefügt ist.

4. Rumpfabschnitt nach einem der Ansprüche 2 oder 3, **dadurch gekennzeichnet, dass** die Rumpfteilstücke (2a, 2b) wenigstens einen am Ende im Bereich der Verbindungsmittel (4) befindlichen ersten Abschnitt (6a) umfassen, der eine Hautdicke (3a) aufweist, die größer als die Dicke der Haut eines in der Mitte der Rumpfteilstücke (2a, 2b) befindlichen zweiten Abschnitts (6b) ist.

5. Rumpfabschnitt nach einem der Ansprüche 2 bis 4, **dadurch gekennzeichnet, dass** die Verbindungsmittel (4) des Rumpfelements (1) einen Ring (8) umfassen, der geeignet ist, die Häute (3a, 3b) des ersten Rumpfteilstücks (2a) und des benachbarten zweiten Rumpfteilstücks (2b) zu verbinden.

6. Rumpfabschnitt nach einem der Ansprüche 2 bis 5, **dadurch gekennzeichnet, dass** die Verbindungsmittel (4) ein zweites Versteifungselement (9) des Rumpfes umfassen, das einen Körper (9a), welcher in einer Ebene quer zu der Längsachse (X) des Rumpfes verläuft, sowie einen Flansch (9b), welcher entlang der Längsachse (X) des Rumpfes verläuft, umfasst.

7. Rumpfabschnitt nach Anspruch 6, in Abhängigkeit von Anspruch 5, **dadurch gekennzeichnet, dass** der Ring (8) auf der Außenfläche der Haut (3a) angeordnet ist und der Flansch (9b) an der Innenfläche (31a) der Haut (3a) des ersten Rumpfteilstücks (2a) befestigt ist.

8. Rumpfabschnitt nach einem der Ansprüche 2 bis 5, **dadurch gekennzeichnet, dass** ein zweites Versteifungselement (9) des Rumpfes einen Körper (9a) umfasst, der in einer Ebene quer zu der Längsachse (X) des Rumpfes verläuft, das Rumpfelement (1) einen von der Haut (3a) zur Längsachse (X) des Rumpfes in einer Ebene quer zu der Längsachse (X) des Rumpfes verlaufenden Kranzteil (9c) umfasst, der dazu ausgelegt ist, den Körper (9a) des zweiten Versteifungselements (9) zu befestigen.

9. Rumpf eines Luftfahrzeugs, **dadurch gekennzeichnet, dass** er wenigstens einen Rumpfabschnitt nach einem der Ansprüche 2 bis 8 umfasst.

10. Luftfahrzeug, **dadurch gekennzeichnet, dass** es einen Rumpf nach Anspruch 9 umfasst.

## Claims

1. Fuselage element (1) comprising a first fuselage section (2a) comprising a skin (3a), and junction means (4) able to connect the said first section (2a) to a second adjacent fuselage section (2b), the said first section (2a) extending along the longitudinal axis (X) of the fuselage, the fuselage element (1) comprising stiffener elements (5a) extending along the said axis (X), **characterized in that** the end (5a1) of at least one stiffener element (5a) extends beyond a free edge (7) of the said skin (3a) by a predetermined length (L).

2. Fuselage portion, **characterized in that** it comprises a fuselage element (1) in accordance with claim 1, and a second fuselage section (2b) adjacent to the first section (2a) and extending along the longitudinal axis (X) of the fuselage, the skin (3b) of the said second fuselage section (2b) being connected to the skin (3a) of the said first fuselage section (2a) of the said fuselage element (1), the said second fuselage section (2b) comprising stiffener elements (5b) extending along that said axis (X) over more or less the entire length of the second fuselage section (2b) and being arranged with an angular offset around the longitudinal axis (X) in relation to the said at least one stiffener element (5a) of the first fuselage section (2a) extending beyond the free edge (7) of the skin (3a) of the first fuselage section (2a).

3. Fuselage portion in accordance with claim 2, **characterized in that** the stiffener elements (5a) of the said first fuselage section (2a) extend beyond the free edge (7) of the skin (3a) of the first fuselage section (2a) and the stiffener elements (5b) of the said second fuselage section (2b) extend beyond the free edge of the skin (3b) of the second fuselage section (2b), each stiffener of the first fuselage section (2a) being inserted between two stiffeners of the second fuselage section (2b).

4. Fuselage portion in accordance with one of claims 2 or 3, **characterized in that** the said fuselage sections (2a, 2b) comprise at least a first portion (6a) situated at the end at the junction means (4) having a thickness of skin (3a) greater than the thickness of the skin of a second portion (6b) situated at the center of the said fuselage sections (2a, 2b).

5. Fuselage portion in accordance with one of claims 2 to 4, **characterized in that** the said junction means (4) of the said fuselage element (1) comprise a ferrule (8) able to connect the skins (3a, 3b) of the first fuselage section (2a) and of the second adjacent fuselage section (2b).

6. Fuselage portion in accordance with one of claims 2 to 5, **characterized in that** the junction means (4) comprise a second stiffener element (9) of the fuselage comprising a body (9a) extending in a plane transverse to the longitudinal axis (X) of the fuselage, and a base plate (9b) extending along the longitudinal axis (X) of the fuselage.

7. Fuselage portion in accordance with claim 6 taken as dependent on claim 5, **characterized in that** the said ferrule (8) is arranged on the outer surface of the skin (3a) and the said base plate (9b) is fastened onto the inner surface (31 a) of the skin (3a) of the said first fuselage section (2a).

8. Fuselage portion in accordance with one of claims 2 to 5, **characterized in that** a second stiffener element (9) of the fuselage comprises a body (9a) extending in a plane transverse to the longitudinal axis (X) of the fuselage, the fuselage element (1) comprises a ring part (9c) extending from the skin (3a) to the longitudinal axis (X) of the fuselage, in a plane transverse to the said longitudinal axis (X) of the fuselage, adapted for fastening the said body (9a) of the said second stiffener element (9).

9. Aircraft fuselage **characterized in that** it comprises at least one fuselage portion in accordance with one of claims 2 to 8.

10. Aircraft **characterized in that** it comprises a fuselage according to claim 8.
